# EUROPÄISCHE PATENTSCHRIFT

(11) **EP 3 427 011 B1**
(45) Veröffentlichungstag und Bekanntmachung des Hinweises auf die Patenterteilung: **23.12.2020**
(21) Anmeldenummer: 17707472.1
(22) Anmeldetag: 10.01.2017
(51) Int. Cl.: G01D 5/244

(54) **VERFAHREN ZUM BESTIMMEN EINES WINKELFEHLERS ZWISCHEN EINEM MITTELS EINES WINKELMESSSYSTEMS ERMITTELTEN DREHWINKELWERT UND EINEM REFERENZWERT**
METHOD FOR DETERMINING AN ANGULAR ERROR BETWEEN A ROTATIONAL ANGLE VALUE ASCERTAINED BY MEANS OF AN ANGLE MEASURING SYSTEM AND A REFERENCE VALUE
PROCÉDÉ DE DÉTERMINATION D'UNE ERREUR ANGULAIRE ENTRE UNE VALEUR D'ANGLE DE ROTATION DÉTECTÉE AU MOYEN D'UN SYSTÈME DE MESURE D'ANGLE ET UNE VALEUR DE RÉFÉRENCE

(30) Priorität: 10.03.2016 DE 102016203900
(43) Veröffentlichungstag der Anmeldung: 16.01.2019
(73) Patentinhaber: Robert Bosch GmbH, 70442 Stuttgart (DE)
(72) Erfinder: JUNG, Christian, 71711 Steinheim an der Murr (DE)
(74) Vertreter: Steinbauer, Florian
(86) Internationale Anmeldenummer: PCT/EP2017/050373
(87) Internationale Veröffentlichungsnummer: WO 2017/153065

(56) Entgegenhaltungen:
- DE-A1-102009 031 736
- US-A1- 2006 033 643
- US-A1- 2011 113 853
- US-B1- 6 655 187

## Beschreibung

Die vorliegende Erfindung betrifft ein Verfahren zum Bestimmen eines Winkelfehlers zwischen einem mittels eines Winkelmesssystems ermittelten Drehwinkelwert und einem Referenzwert sowie ein Winkelmesssystem zu dessen Durchführung.

### Stand der Technik

Die Erfindung wird nachfolgend im Wesentlichen unter Bezugnahme auf Fahrzeugantriebe beschrieben. Sie ist jedoch darauf nicht beschränkt, sondern für alle Winkelmesssysteme, welche dazu eingerichtet sind, einen aktuellen Drehwinkelwert eines rotierenden Elements mittels eines Drehwinkelsensors und einer einen Mikrocontroller aufweisenden Auswerteeinheit zu ermitteln, geeignet.

In Fahrzeugen werden verstärkt elektrische Maschine alleine oder zur Unterstützung von Verbrennungsmotoren im Antriebsstrang eingesetzt. Beim Betrieb einer elektrischen Maschine ist es meist wünschenswert, die aktuelle Winkelposition des Rotors der elektrischen Maschine möglichst genau zu kennen. Zu diesem Zweck kann ein Winkelmesssystem, welches üblicherweise aus einem Drehwinkelsensor (sog. Drehgeber) und einer Auswerteeinheit (Steuergerät) besteht, verwendet werden. Die Auswerteeinheit weist einen Mikrocontroller auf, dem die Drehwinkelsignale des Drehwinkelsensors zugeführt werden und der daraus (und üblicherweise aus anderen messsystemspezifischen Parametern wie Offset, Strichzahl usw.) den aktuellen Drehwinkelwert ermittelt. Vor der Verwendung können bzw. sollten Winkelmesssysteme validiert, geeicht bzw. kalibriert werden, wobei insbesondere messsystemspezifische Parametern wie Offset, Strichzahl usw. bestimmt und in der Auswerteeinheit für die weitere Verwendung gespeichert werden. Für die Kalibrierung/Validierung können externe Mess- & Kalibriersysteme eingesetzt werden, was sehr aufwändig ist.

US 2011/113853 A1 offenbart eine interne Kalibrierung in einer Auswerteeinheit durch Vergleich eines Winkelwerts mit einem Referenzwinkelwert, wobei als Referenzsensor ein Laser-Gyroskop an einer Welle angebracht ist.

US 6655187 B1 offenbart ein Verfahren zur Korrektur von Winkelfehlern z.B. in Brennkraftmaschinen, wobei ein erster Sensor an einer ersten Welle und ein Referenzsensor an einer zweiten, damit verbundenen Welle angebracht ist, und wobei die Winkelwerte in "Aufbereitungsschaltungen" erstellt werden und dann ein Korrekturwert durch einen Vergleich gebildet wird.

In DE 102009031736 A1 ist eine interne Fehlerkorrektur eines Drehwinkelsensors durch einen Referenzsensor vorgeschlagen, insbesondere eines Resolvers. Die beiden erfassten Drehwinkelwerte werden an eine externe Verarbeitungseinheit geleitet und dort miteinander verglichen, um einen Winkelfehler zur korrigieren.

Auch US 2006/033643 A1 beschreibt ein Verfahren zur Winkelkorrektur eines Drehgebers, wobei die Bestimmung des Winkelfehlers zwischen Drehgeber und Referenzgeber in einem externen Subtrahierer erfolgt.

### Offenbarung der Erfindung

Erfindungsgemäß werden ein Verfahren zum Bestimmen eines Winkelfehlers zwischen einem mittels eines Winkelmesssystems ermittelten Drehwinkelwert und einem Referenzwert sowie ein Winkelmesssystem zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung schlägt vor, einen Winkelfehler zwischen einem mittels des Winkelmesssystems ermittelten Drehwinkelwert und einem Referenzwert in der Auswerteeinheit des Winkelmesssystems zu bestimmen. Dies macht den Einsatz externer Kalibriersysteme unnötig und vereinfacht die Kalibrierung bzw. Validierung maßgeblich. Vorteilhafterweise muss lediglich ein Referenzwert in der Auswerteeinheit vorliegen.

Bei der Verwendung von externen Mess- & Kalibriersystemen kann die zeitgleiche Bestimmung von Drehwinkelwert und Referenzwert in vielen Fällen schwer erreicht werden. Es muss oft teure Messhardware beschaffen werden, um die von der Auswerteeinheit ermittelten Drehwinkelwerte zu extrahieren. Weiterhin entstehen zeitliche Verzögerungen, die berücksichtigt werden müssen. Im schlimmsten Fall sind diese Verzögerungen nicht von konstanter Natur, was eine Messung bei höheren Drehzahlen immer ungenauer bis unmöglich macht.

Ein Vorteil der Erfindung besteht darin, dass die Signale (Messung und Referenz), welche für die Winkelfehlerberechnung verwendet werden, zeitgleich abgetastet werden können und einen möglichst geringen Weg haben, was eine weitgehend deterministische Signalübertragung sicherstellt. Dies verbessert die Winkelfehlerberechnung. Weiterhin bietet sich durch die Erfindung ein Kostenvorteil, da auf Kalibriersysteme, welche möglicherweise sogar als teure Rapid-Prototyping-Systeme extra hergestellt werden müssen, verzichtet werden kann.

Vorzugsweise weist die Auswerteeinheit einen Mikrocontroller auf, der wenigstens einen Eingang zum Empfangen des Drehwinkelsignals und wenigstens einen Eingang zum Empfangen des Referenzwinkelsignals aufweist. Es ist besonders vorteilhaft, wenn die Ermittlung von Drehwinkelwert und Referenzwinkelwert in demselben Mikrocontroller stattfindet, da damit eine höchstmögliche Synchronität der Werte gewährleistet werden kann. Das Ende der Signalkette eines Winkelmesssystems liegt in der Regel im Mikrokontroller an der Stelle, an der ermittelte Drehwinkelwert verwendet wird, z.B. für die Drehzahlregelung (o.ä.) einer z.B. elektrischen Maschine. Der Drehwinkelwert ist also bereits im Mikrokontroller digital verfügbar. Im Rahmen dieser bevorzugten Ausführungsform wird nun ein Referenzwinkelsignal in den Mikrocontroller geführt, wo dann die entsprechenden Rechenoperationen zur Winkelfehlerbestimmung ausgeführt werden. Somit wird keine externe Recheneinheit mehr benötigt.

Vorzugsweise weisen der wenigstens eine Eingang zum Empfangen des Drehwinkelsignals und/oder der wenigstens eine Eingang zum Empfangen des Referenzwinkelsignals einen Zählereingang (Counter) und/oder Analogeingang (ADC) und/oder einen Rücksetzeingang, z.B. Interrupteingang, auf.

Bevorzugte Winkelsignale umfassen ein oder mehrere Zählsignale (z.B. Rechtecksignal) und/oder ein oder mehrere Analogsignale (z.B. Sinus-, Cosinussignal) und/oder ein oder mehrere Referenzimpuls- bzw. Nullimpulssignale.

Ein Zählsignal kann vorzugsweise direkt auf einen Zählereingang des Mikrocontrollers geführt werden. Beispielsweise jede steigende Flanke erhöht dann den Zähler im Mikrokontroller, so dass der Zählerstand einem Winkelwert entspricht. Das Referenzimpulssignal ("Nullimpuls") dient dazu, den Zählerstand nach jeder Umdrehung auf 0 zu setzen. Es wird zweckmäßigerweise auf einen Interrupteingang (oder einen entsprechenden funktionsgleichen Eingang) des Mikrocontrollers geführt.

Ein oder mehrere Analogsignale können direkt auf entsprechend viele Analogeingänge des Mikrocontrollers geführt werden. Eine Auswertung erfolgt vorzugsweise wie bei Sinus/Cosinus-Drehgebern im Stand der Technik.

Vorzugsweise weist der Mikrocontroller wenigstens einen Ausgang zum Ausgeben des Winkelfehlers und/oder des Drehwinkelwerts und/oder des Referenzwerts auf und ist zur Ausgabe an dem Ausgang eingerichtet. Auf diese Weise können die ermittelten Größen extern weiterverarbeitet und/oder visualisiert werden.

In herkömmlichen Auswerteeinheiten, wie z.B. Steuergeräten in Fahrzeugen, ist in der Regel ein Stecker vorhanden, welcher verschiedene Schnittstellen, wie z.B. CAN, steuergeräte-extern zu Verfügung stellt. Moderne Mikrocontroller verfügen überdies über zahlreiche E/A-Anschlüsse, z.B. fest definierte I/O- oder GPIO- (General Purpose Input/Output; Allzweck-Eingabe/Ausgabe), d.h. wahlfrei als Ein- oder Ausgang konfigurierbare Anschlüsse bzw. Pins, die für die genannten Zwecke (insbesondere Zählereingang, Rücksetzeingang, digitaler Ausgang) werden können. Somit ist eine Schnittstelle für einen Referenzgeber in praktisch jedem Steuergerät für elektrische Antriebe vorhanden.

Vorzugsweise kann die Auswerteeinheit zwischen einem Auswertemodus, in welchem der bzw. die Winkelfehler bestimmt werden, und einem Normalmodus, in welchem Drehwinkelwerte ermittelt werden, umgeschaltet werden. So kann die Auswerteeinheit bzw. das Winkelmesssystem in dem Auswertemodus (insbesondere zur Kalibrierung, d.h. Bestimmung messsystemspezifischer Parameter wie Offset, Strichzahl usw. und/oder Validierung, d.h. Bewertung, ob der bzw. die Winkelfehler für bestimmte Situationen innerhalb zulässiger Grenzen liegen) und in dem Normalmodus, in welchem die Drehwinkelwerte ermittelt und insbesondere für andere Funktionen, wie z.B. Regelungen bereitgestellt werden, umgeschaltet werden. In dem Normalmodus können insbesondere die Eingänge für den Referenzwert und die Ausgänge für den Winkelfehler für andere Zwecke verwendet werden.

Vorteilhafterweise wird ein erfindungsgemäßes Winkelmesssystem verwendet zur Messung einer Drehwinkelposition eines Rotors eines Elektromotors, insbesondere eines Elektromotors eines Fahrantriebs eines Fahrzeugs. Prinzipiell ist der Einsatz überall vorteilhaft, wo ein Winkelmesssystem durch ein Steuergerät ausgewertet wird. Solche Winkelmessungen finden z.B. auch in Drosselklappen, Scheibenwischerpositionierung, Pedalweggeber, Lenkwinkelgeber usw. Verwendung.

Vorteilhafterweise wird eine Anzahl von Winkelfehlern nacheinander ermittelt, insbesondere über wenigstens eine Umdrehung. Dadurch wird ein drehwinkelabhängiger Winkelfehler erhalten. Dadurch kann eine besonders genaue Validierung und/oder Kalibrierung einer Positionsabhängigkeit erfolgen.

Vorteilhafterweise werden Winkelfehler für unterschiedliche Drehgeschwindigkeiten ermittelt, insbesondere über jeweils wenigstens eine Umdrehung. Dadurch wird ein drehgeschwindigkeitsabhängiger Winkelfehler erhalten. Dadurch kann eine besonders genaue Validierung und/oder Kalibrierung einer Geschwindigkeitsabhängigkeit erfolgen.

Ein erfindungsgemäßes Winkelmesssystem ist, insbesondere programmtechnisch, dazu eingerichtet, ein erfindungsgemäßes Verfahren durchzuführen.

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

Kurze Beschreibung der Zeichnungen
Figur 1 zeigt schematisch eine bevorzugte Ausführungsform eines erfindungsgemäßen Winkelmesssystems in Verbindung mit einem Referenzwinkelsensor.
Figur 2 zeigt schaltplanartig eine bevorzugte Ausführungsform eines erfindungsgemäßen Winkelmesssystems.

### Ausführungsform(en) der Erfindung

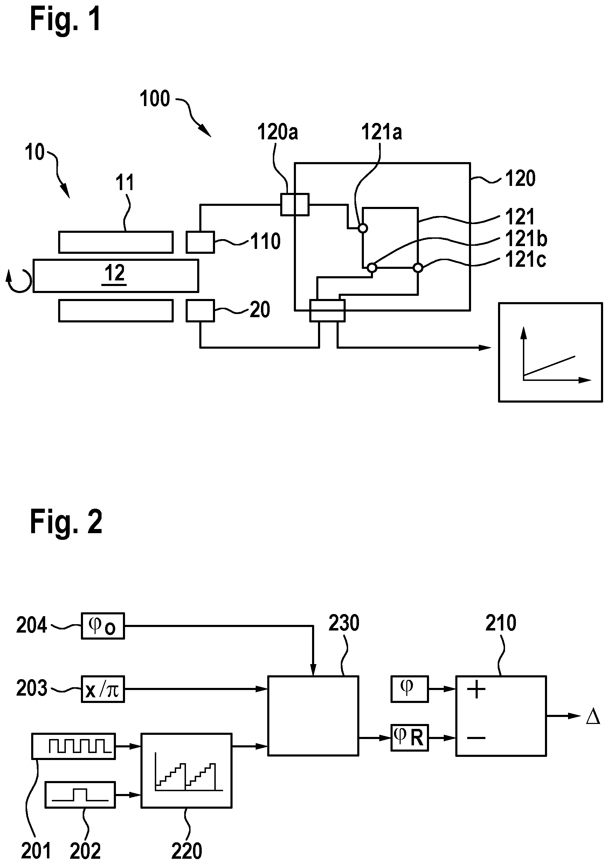

In Figur 1 ist schematisch eine bevorzugte Ausführungsform eines erfindungsgemäßen Winkelmesssystems 100 dargestellt. Das Winkelmesssystem 100 weist einen Drehwinkelsensor 110 sowie eine Auswerteeinheit 120 auf.

Die Auswerteeinheit 120 weist unter anderem einen Mikrocontroller 121 auf, der einen Eingang 121a für ein Drehwinkelsignal des Drehwinkelsensors 110 aufweist. Ein zugehöriger Anschluss 120a ist an der Auswerteeinheit 120 ausgebildet. Der Drehwinkelsensor 110 kann beispielsweise über ein Verbindungskabel an dem Anschluss 120a angeschlossen sein.

Der Drehwinkelsensor 110 ist an einer elektrischen Maschine 10 aufweisend einem Stator 11 und einem Rotor 12 angeordnet, um eine Drehbewegung des Rotors 12 zu messen.

Die Auswerteeinheit 120 ist dazu eingerichtet, aus dem Drehwinkelsignal des Drehwinkelsensors 110 einen Drehwinkelwert zu ermitteln.

Der Drehwinkelwert kann in einem Normalmodus in der Auswerteeinheit 120, wenn diese beispielsweise als Steuergerät ausgebildet ist, für andere Funktionen verwendet werden und/oder an einem als Ausgang konfigurierten Anschluss 121c ausgegeben werden, insbesondere zur Weiterverarbeitung in angeschlossenen Recheneinheiten.

Zur Validierung und/oder Kalibrierung des Messsystems 100 kann dieses in einem Auswertemodus betrieben werden, in welchem ein Winkelfehler zwischen dem Drehwinkelwert und einem Referenzwert bestimmt wird. Der Referenzwert wird aus einem Referenzwinkelsignal ebenfalls in dem Mikrocontroller 121 der Auswerteeinheit 120 bestimmt, welches an einem als Eingang 121b konfigurierten Anschluss zugeführt wird. Das Referenzwinkelsignal stammt von einem ebenfalls an der elektrischen Maschine 10 angeordneten Referenzwinkelsensor 20 und umfasst beispielsweise ein Zählsignal und einen Nullimpuls, wie es von Drehgebern im Stand der Technik bekannt ist.

Im Auswertemodus kann der Ausgang 121c des Mikrocontrollers 121 zur Ausgabe des bestimmten Winkelfehlers verwendet werden, wobei zusätzlich auch andere Größen wie z.B. die aktuelle Drehzahl und/oder der Referenzwert mit ausgegeben werden können. Der Ausgang kann beispielsweise eine CAN- oder eine On-Chip-Debugging-Schnittstelle (z.B. JTAG/Nexus) sein.

Auf diese Weise kann ein Zusammenhang zwischen einerseits dem Winkelfehler und andererseits der Drehzahl und/oder dem Referenzwinkel ermittelt und beispielsweise visualisiert werden. Dadurch kann das Winkelmesssystem validiert werden, wobei überprüft wird, ob der existierende Winkelfehler beispielsweise in dem überprüften Winkel- und/oder Drehzahlbereich innerhalb zulässiger Grenzen liegt.

Alternativ oder zusätzlich kann eine Kalibrierung stattfinden, wobei messsystemspezifische Parameter wie Offset, Strichzahl usw. so bestimmt werden, dass der Winkelfehler möglichst klein wird.

In Figur 2 ist eine programmtechnische Lösung zur Bestimmung eines Winkelfehlers gemäß einer bevorzugten Ausführungsform der Erfindung in einem Blockdiagramm dargestellt.

In einem Rechenglied 210 wird der Winkelfehler Δ als Differenz zwischen einem Drehwinkelwert ϕ, wie er in dem Mikrocontroller 121 aus dem Drehwinkelsignal des Drehwinkelsensors 110 ermittelt wird, und einem Referenzwert ϕ_{R}, wie er in dem Mikrocontroller 121 aus dem Referenzwinkelsignal des Referenzwinkelsensors 20 ermittelt wird, bestimmt.

In der Ausführungsform gemäß Figur 2 umfasst das Referenzwinkelsignal ein Zählsignal 201 und ein Referenzimpulssignal bzw. Nullimpulssignal 202, welche einem Zähler-Funktionsblock 220 zugeführt werden, welcher nach Maßgabe des Zählsignals 201 hochzählt und durch das Referenzimpulssignal 220 zurückgesetzt wird. Der Zähler-Funktionsblock 220 gibt somit einen Zählerwert 0, 1, 2, ... aus. Es sei jedoch darauf hingewiesen, dass das Referenzwinkelsignal ebenso ein Sinus- und/oder Cosinussignal oder anderes Analogsignal umfassen kann.

In einem Funktionsblock 220 wird der Zählerwert mit einer Strichzahl 203 (d.h. wie viele Striche bzw. welchen Zählwert hat eine Umdrehung) verrechnet, um den Referenzwert zu bestimmen. In dem Funktionsblock 230 kann weiterhin ein Offset ϕ_{O} verrechnet werden, der beispielsweise einen Winkelversatz zwischen dem Drehwinkelsensor 110 und dem Referenzwinkelsensor 20 berücksichtigt.

## Patentansprüche

1. Verfahren zum Bestimmen eines Winkelfehlers (Δ) zwischen einem mittels eines Winkelmesssystems (100) ermittelten Drehwinkelwert (ϕ) und einem Referenzwert (ϕ_{R}),
wobei der Drehwinkelwert (ϕ) aus einem Drehwinkelsignal eines Drehwinkelsensors (110) in einer Auswerteeinheit (120) des den Drehwinkelsensor (110) und die Auswerteeinheit (120) aufweisenden Winkelmesssystems (100) ermittelt wird,
wobei der Referenzwert (ϕ_{R}) aus einem Referenzwinkelsignal in der Auswerteeinheit (120) des Winkelmesssystems (100) ermittelt wird,
wobei der Winkelfehler zwischen dem Drehwinkelwert (ϕ) und dem Referenzwert (ϕ_{R}) in der Auswerteeinheit (120) des Winkelmesssystems (100) bestimmt wird,
wobei die Auswerteeinheit (120) einen Mikrocontroller (121) aufweist,
wobei das Drehwinkelsignal auf wenigstens einen Eingang (121a) des Mikrocontrollers geführt wird, um den Drehwinkelwert zu ermitteln,
**dadurch gekennzeichnet, dass** das Referenzwinkelsignal ein Zählsignal, das auf einen Zählereingang des Mikrocontrollers (121) geführt wird, und ein Referenzimpulssignal, das auf einen Interrupteingang des Mikrocontrollers (121) geführt wird, aufweist, um den Referenzwert zu ermitteln.

2. Verfahren nach Anspruch 1, wobei das Drehwinkelsignal
a) wenigstens ein Zählsignal mit einem Nullimpulssignal, und/oder
b) wenigstens ein Analogsignal umfasst.

3. Verfahren nach Anspruch 1 oder 2, wobei eine Anzahl von Winkelfehlern (Δ) nacheinander ermittelt wird.

4. Verfahren nach einem der vorstehenden Ansprüche, wobei Winkelfehler (Δ) für unterschiedliche Drehgeschwindigkeiten ermittelt werden.

5. Verfahren nach einem der vorstehenden Ansprüche, wobei der Winkelfehler (Δ) zur Kalibrierung und/oder Validierung des Winkelmesssystems (100) verwendet wird.

6. Verfahren nach einem der vorstehenden Ansprüche, wobei das Winkelmesssystem (100) zwischen einem Auswertemodus und einem Normalmodus umgeschaltet wird.

7. Computerprogramm, das eine Auswerteeinheit dazu veranlasst, ein Verfahren nach einem der vorstehenden Ansprüche durchzuführen, wenn es auf der Auswerteeinheit des Winkelmesssystems nach einem der Ansprüche 9 bis 11 ausgeführt wird.

8. Maschinenlesbares Speichermedium mit einem darauf gespeicherten Computerprogramm nach Anspruch 7.

9. Winkelmesssystem (100), das einen Drehwinkelsensor (110) und eine Auswerteeinheit (120) aufweist,
wobei die Auswerteeinheit (120) einen Mikrocontroller (121) mit wenigstens einem Eingang (121) zum Empfangen des Drehwinkelsignals, einem Zählereingang und einem Interrupteingang aufweist,
und wobei das Winkelmesssystem (100) dazu eingerichtet ist, ein Verfahren nach einem der Ansprüche 1 bis 6 durchzuführen.

10. Winkelmesssystem (100) nach Anspruch 9, wobei der wenigstens eine Eingang (121a) zum Empfangen des Drehwinkelsignals einen Zählereingang und einen Rücksetzeingang, und/oder einen Analogeingang aufweist.

11. Winkelmesssystem (100) nach einem der Ansprüche 9 bis 10, wobei der Mikrocontroller (121) einen Ausgang (121c) zum Ausgeben des Winkelfehlers (Δ) und/oder des Drehwinkelwerts (ϕ) und/oder des Referenzwerts (ϕ_{R}) aufweist.

12. Verwendung eines Winkelmesssystems (100) nach einem der Ansprüche 9 bis 11 zur Messung einer Drehwinkelposition eines Rotors eines Elektromotors (10) oder einer Drosselklappe oder eines Scheibenwischers oder eines Pedalweggebers oder eines Lenkwinkelgebers.

## Claims

1. Method for determining an angle error (Δ) between an angle of rotation value (ϕ) determined by means of an angle measuring system (100) and a reference value (ϕ_{R}),
wherein the rotation angle value (ϕ) is determined from a rotation angle signal of a rotation angle sensor (110) in an evaluation unit (120) of the angle measuring system (100) comprising the rotation angle sensor (110) and the evaluation unit (120),
wherein the reference value (ϕ_{R}) is determined from a reference angle signal in the evaluation unit (120) of the angle measuring system (100),
wherein the angle error between the rotation angle value (ϕ) and the reference value (ϕ_{R}) is determined in the evaluation unit (120) of the angle measuring system (100),
wherein the evaluation unit (120) comprises a microcontroller (121), wherein the rotation angle signal is guided to at least an input (121a) of the microcontroller to determine the rotation angle value,
**characterized in that** the reference angle signal comprises a count signal guided to a counter input of the microcontroller (121) and a reference pulse signal guided to an interrupt input of the microcontroller (121) to determine the reference value.

2. Method according to claim 1, wherein the rotation angle signal comprises
a) at least a count signal with a zero pulse signal, and/or
b) at least an analog signal.

3. Method according to claim 1 or 2, wherein a number of angular errors (Δ) is determined in succession.

4. Method according to any one of the preceding claims, wherein angular errors (Δ) are determined for different rotational speeds.

5. Method according to any one of the preceding claims, wherein the angle error (Δ) is used for calibration and/or validation of the angle measuring system (100).

6. Method according to any one of the preceding claims, wherein the angle measuring system (100) is switched between an evaluation mode and a normal mode.

7. Computer program which causes an evaluation unit to perform a method according to any one of the preceding claims when executed on the evaluation unit of the angle measuring system according to any one of claims 9 - 11.

8. Machine readable storage medium with a computer program according to claim 7 stored thereon.

9. Angle measuring system (100) comprising a rotation angle sensor (110) and an evaluation unit (120),
wherein the evaluation unit (120) comprises a microcontroller (121) with at least an input (121a) for receiving the rotation angle signal, a counter input and an interrupt input,
and wherein the angle measuring system (100) is configured to perform a method according to any one of claims 1 to 6.

10. Angle measuring system (100) according to claim 9, wherein the at least one input (121a) for receiving the rotation angle signal comprises a counter input and a reset input, and/or an analog input.

11. Angle measuring system (100) according to any one of claims 9 to 10, wherein the microcontroller (121) comprises an output (121c) for outputting the angle error (Δ) and/or the rotation angle value (ϕ) and/or the reference value (ϕ_{R})

12. Use of an angle measuring system (100) according to any one of claims 9 to 11 for measuring a rotational angular position of a rotor of an electrical motor (10) or a throttle valve or a windshield wiper or a pedal travel sensor or a steering angle sensor.

## Revendications

1. Procédé pour déterminer une erreur angulaire (Δ) entre une valeur d'angle de rotation (ϕ) déterminée au moyen d'un système de mesure d'angle (100) et une valeur de référence (ϕ_{R}),
dans lequel la valeur d'angle de rotation (ϕ) est déterminée à partir d'un signal d'angle de rotation d'un capteur d'angle de rotation (110) dans une unité d'évaluation (120) du système de mesure d'angle (100) comportant le capteur d'angle de rotation (110) et l'unité d'évaluation (120),
dans lequel la valeur de référence (ϕ_{R}) est déterminée à partir d'un signal d'angle de référence dans l'unité d'évaluation (120) du système de mesure d'angle (100),
dans lequel l'erreur angulaire entre la valeur d'angle de rotation (ϕ) et la valeur de référence (ϕ_{R}) est établie dans l'unité d'évaluation (120) du système de mesure d'angle (100),
dans lequel l'unité d'évaluation (120) comporte un microcontrôleur (121), dans lequel le signal d'angle de rotation est transmis à au moins une entrée (121a) du microcontrôleur afin de déterminer la valeur de l'angle de rotation,
**caractérisé en ce que** le signal d'angle de référence comporte un signal de comptage qui est transmis à une entrée de compteur du microcontrôleur (121), et un signal d'impulsion de référence qui est transmis à une entrée d'interruption du microcontrôleur (121) afin de déterminer la valeur de référence.

2. Procédé selon la revendication 1, dans lequel le signal d'angle de rotation inclut
a) au moins un signal de comptage avec un signal d'impulsion zéro, et/ou
b) au moins un signal analogique.

3. Procédé selon la revendication 1 ou 2, dans lequel un nombre d'erreurs angulaires (Δ) consécutives est déterminé.

4. Procédé selon l'une des revendications précédentes, dans lequel des erreurs angulaires (Δ) sont déterminées pour différentes vitesses de rotation.

5. Procédé selon l'une des revendications précédentes, dans lequel l'erreur angulaire (Δ) est utilisée pour étalonner et/ou valider le système de mesure d'angle (100).

6. Procédé selon l'une des revendications précédentes, dans lequel le système de mesure d'angle (100) est commuté entre un mode d'évaluation et un mode normal.

7. Programme informatique qui permet à une unité d'évaluation de mettre en œuvre un procédé selon l'une des revendications précédentes, lorsqu'il est exécuté sur l'unité d'évaluation selon l'une des revendications 9 à 11.

8. Support de mémoire lisible par machine sur lequel est stocké un programme informatique selon la revendication 7.

9. Système de mesure d'angle (100) comportant un capteur d'angle de rotation (110) et une unité d'évaluation (120), dans lequel l'unité d'évaluation (120) comporte un microcontrôleur (121) ayant au moins une entrée (121a) pour recevoir le signal d'angle de rotation, une entrée de compteur et une entrée d'interruption,
et dans lequel le système de mesure d'angle (100) est conçu pour mettre en œuvre un procédé selon l'une des revendications 1 à 6.

10. Système de mesure d'angle (100) selon la revendication 9, dans lequel la au moins une entrée (121a) pour recevoir le signal d'angle de rotation comporte une entrée de compteur et une entrée de réinitialisation, et/ou une entrée analogique.

11. Système de mesure d'angle (100) selon l'une des revendications 9 à 10, dans lequel le microcontrôleur (121) comporte une sortie (121c) pour générer une erreur angulaire (Δ) et/ou la valeur d'angle de rotation (ϕ) et/ou la valeur de référence (ϕ_{R}).

12. Utilisation d'un système de mesure d'angle (100) selon l'une des revendications 9 à 11 pour mesurer une position d'angle de rotation d'un rotor d'un moteur électrique (10) ou d'un papillon des gaz ou d'un essuie-glace ou d'un capteur de course de pédale ou d'un capteur d'angle de braquage.
